# EUROPEAN PATENT APPLICATION

(11) **EP 2 952 124 A1**
(43) Date of publication of application: **09.12.2015**
(21) Application number: 14171124.2
(22) Date of filing: 04.06.2014
(51) Int. Cl.: A47J 31/20, A47G 19/16

(54) **Strainer**

(71) Applicant: Fiskars Home Oy Ab, 00560 Helsinki (FI)
(72) Inventor: Savolainen, Heikki, 00560 Helsinki (FI)
(74) Representative: Kolster Oy Ab

(57) **Abstract**

The invention relates to a strainer (1) comprising a receptacle (2) having perforations (8) allowing a liquid to enter and to exit the receptacle (2) via the perforations (8) . The receptacle (2) is provided with an elongated handle (4) protruding from the receptacle, the strainer (1) comprises a cover (3) provided with an opening (7) through which the handle (4) protrudes when the cover is arranged on top of the receptacle (2), and the cover (3) is movable along the handle (4) between a distal position and a proximal position where the receptacle (2) and cover (3) are closely located together.

## Description

### BACKGROUND OF THE INVENTION

### FIELD OF THE INVENTION

This invention relates to a strainer with a receptacle having perforations allowing a liquid to enter and exit the receptacle via the perforations. In the following the invention will be mainly explained by referring to a tea strainer, though it should be observed that this is only by way of example, and that the invention may be utilized also for other strainers.

### DESCRIPTION OF PRIOR ART

Previously there is known a tea strainer having a receptacle which is provided with perforations allowing a liquid to enter and to exit the receptacle via the perforations. By utilizing a spoon or by pouring tea leaves from a container which is filled with tea leaves, the user may fill the receptacle with a suitable amount of tea leaves.

The above mentioned tea strainer comprises a part which the user can move within the receptacle once the filled tea strainer is immersed in hot water capable of entering the receptacle via the perforations. The movable part enhances mixing of the water and the tea leaves within the receptacle, such that a suitable amount of tea will remain in the hot water once the strainer is removed therefrom.

A drawback with the above mentioned tea strainer is that it is cumbersome to fill. Pouring a suitable amount of tea leaves into the receptacle may fail, as part of the tea leaves may end up on the table or floor below the receptacle. Additionally, in this way it is difficult to get the correct amount of tea leaves into the receptacle. Therefore, in many cases the user is forced to utilize a spoon to fill the receptacle, which is not very practical.

### SUMMARY OF THE

### INVENTION

An object of the present invention is to solve the above mentioned drawback and to provide a strainer which can easily be filled with a desired amount of substance, and which is practical and easy to use. This and other objects are obtained with a strainer as defined in independent claim 1.

The use of a receptacle with an elongated protruding handle along which a cover which is movable along the handle makes it possible to utilize the handle for filling the receptacle with a substance while the cover is in a distal position, and to force liquid to exit the receptacle by pressing the cover towards the substance while the cover is in a proximal position.

Preferred embodiments of the invention are disclosed in the dependent claims.

### BRIEF DESCRIPTION OF DRAWINGS

In the following the present invention will be described in closer detail by way of example and with reference to the attached drawings, in which
Figure 1 illustrates a strainer with the cover in a proximal position, and
Figures 2 illustrates the strainer of Figure 1 with the cover in a distal position.

### DESCRIPTION OF AT LEAST ONE EMBODIMENT

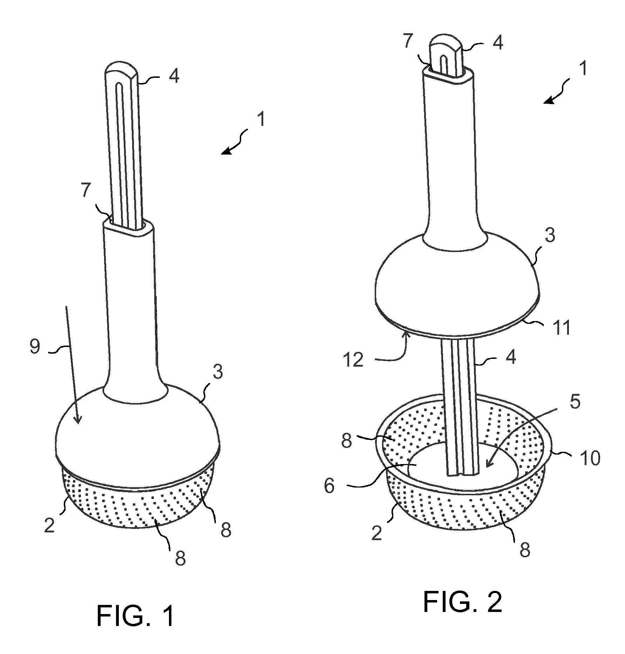

Figures 1 and 2 illustrate a first embodiment of a strainer 1. The strainer 1 comprises a receptacle 2 and a cover 3.

An elongated handle 4 protrudes from the receptacle 2. In the illustrated example the handle 4 protrudes outwards from a central part 5 of an inner bottom surface 6 of the receptacle.

The cover 3 is provided with an opening 7 through which an upper end of the handle 4 protrudes. The cover is movable along the handle between a distal position illustrated in Figure 2, where the receptacle 2 and cover 3 are located at a distance from each other, and a proximal position illustrated in Figure 1.

In the distal position of Figure 2, the receptacle 2 and cover 3 are located sufficiently fare away from each other to allow a user of the strainer to grab the handle 4 and to move the receptacle 2 into a location where a substance, such as tea leaves, is located. By using the handle, the user can dip (and dig) the receptacle 2 into the substance in order to provide a suitable amount of substance, such as tea leaves, into the receptacle. This filling of the receptacle with the substance does not require any other tools or devices to be used. Naturally, instead of keeping the cover 3 in the illustrated distal position while filling the receptacle 2 with substance, the user can choose to entirely remove the cover by lifting it up above the handle 4 during the filling. Consequently, it is possible to easily totally remove the cover 3 from other parts of the strainer, which is an advantage also when it is time to wash the strainer, for instance.

Once a suitable amount of substance is located in the receptacle, the user can move the cover 3 to the proximal position illustrated in Figure 1. In this position, the cover and receptacle together enclosed the substance in the strainer, as the cover 3 covers substantially the entire upper surface of the receptacle 2. At this stage the receptacle 2 may be immersed in a liquid, such as into hot water. Perforations 8 in the receptacle 2 allow the liquid to enter the receptacle and to mix up with the substance which is located in the receptacle. The user may press the cover 3 towards the substance in the receptacle with a finger, for instance, as indicated by arrow 9. This may be done while the receptacle is still immersed in the liquid, of afterwards, once the receptacle has been removed from the liquid. Pressing the cover 3 towards the substance, such as tea leaves, will force the substance to be pressed towards the receptacle which will cause the liquid in the receptacle to leave the receptacle via the perforations 2. In case of tea leaves and hot water, aromas from the tea leaves will leave the receptacle together with the hot water in to a cup, for instance.

The cover may be manufactured of silicon, for instance, which is a very resilient and flexible material that allows the user to easily change the shape of the cover 3 by pressing an upper part of the cover. In that case the cover is advantageously hollow, in other words, the wall thickness may be only a few millimeters or less. Instead of silicone other suitable materials, such as rubber, may be used.

Alternatively, the cover can be manufactured of a material which is much more stiff than silicone. One alternative is to utilize a plastic material. Also in this case the cover may be hollow. However, when a relatively stiff material is used, it may be advantageous to utilize a solid cover, in other words a cover which has only an opening 7 extending through the cover that has been dimensioned to be slightly larger in diameter than the width of the handle 4 which extends through this opening 7. In that case the material of the cover 3 maintains it original shape, or changes shape very little, once the user presses the upper part of the cover at the location indicated with the arrow 9 while the cover is located in the proximal position illustrated in Figure 1. Due to such pressing a lower surface 12 of the cover 3, in other words the surface that forms the lid over the receptacle, is pressed towards the receptacle 2 such that it makes contact with the substance which is present in the receptacle. The substance is then compressed between the lower surface 12 of the cover 3 and the receptacle 2 such that liquid present in the receptacle 2 is forced to exit the receptacle via the perforations 8.

The receptacle 2 and the handle 3 are preferably manufactured of a material which is relatively stiff in order to substantially keep its shape while the strainer is used according to the above explanations, and which is easy to wash. Suitable materials include metal materials, such as aluminum and steel, plastic materials, and ceramic materials, for instance. The receptacle 2 is provided with perforations 8 which have a diameter dimensioned depending on the substance that the strainer is intended for. Naturally the dimension of the perforations 8 or holes should be selected so that the most of the substance remains within the strainer and is unable to pass through the perforations, while the used liquid may pass in and out of the receptacle 2 via the perforations 8. In case of a tea strainer where the intended substance is tea leaves, the perforations should preferably have a diameter around 1 mm or less.

In Figure 2 it has by way of example been illustrated that no perforations are arranged at the location of the central part 5 of the inner bottom surface 6 of the receptacle 2. This is only an example of one possible implementation. In other implementations the receptacle 2 may be perforated also in this part, such that perforations are present in the entire surface area of the receptacle 2. The shape of the receptacle may also vary from what has been illustrated by way of example. The receptacle may have a substantially cylindrical shape, with straight vertical oriented side walls and a straight and flat horizontally oriented bottom surface. Alternatively the bottom of the receptacle 2 may be spherical and the side walls may extend slightly outwards from the bottom surface in relation to the vertical orientation. It is also possible that the cross section of the receptacle is not round or circular, as illustrated in the figures, but instead rectangular, for instance.

In case of a resilient and flexible cover 3 of silicone, for instance, the upper edge 10 of the receptacle 2 may be shaped and dimensioned to meet the lower edge 11 of the hollow cover 3. In that case the properties of the material of the cover makes it possible for the user to change the shape of the cover in order to compress the substance in the receptacle, as has been previously explained. However, if the cover is of a stiff material, it may be advantageous to dimension and shape the receptacle and cover in such a way that the lower edge 11 of the cover 3 may pass inside of the upper edge 10 of the receptacle 2. In that case the cover 3 may penetrate into the receptacle 2 as a piston in a cylinder of an engine in order to come into contact with the substance within the receptacle also when the amount of substance is relatively small. In that case the lower surface 12 of the cover may move very closely to, or even contact, the inner bottom surface 6 of the receptacle 2.

Instead of providing the strainer with only one handle 4 which is centrally located in the receptacle, more than one protrusion may protrude upwards from the receptacle, such that one or more of these protrusions together form the handle. In that case openings 7 are provided in the cover for these additional protrusions at appropriate locations.

It is to be understood that the above description and the accompanying figures are only intended to illustrate the present invention. It will be obvious to a person skilled in the art that the invention can be varied and modified without departing from the scope of the invention.

## Claims

1. A strainer (1) comprising:
a receptacle (2) having perforations (8) allowing a liquid to enter and to exit the receptacle (2) via the perforations (8), **characterized in that**
the receptacle (2) is provided with an elongated handle (4) protruding from the receptacle,
the strainer (1) comprises a cover (3) provided with an opening (7) through which the handle (4) protrudes when the cover is arranged on top of the receptacle (2), and
the cover (3) is movable along the handle (4) between a distal position where the receptacle (2) and cover (3) are located at a distance from each other which allows the user to use the handle (4) for filling the receptacle (2) with a substance by dipping the receptacle into the substance, and a proximal position where the receptacle (2) and cover (3) are closely located together which allows the user to press the cover (3) towards the substance in the receptacle for forcing liquid to exit the receptacle.

2. The strainer according to claim 1, wherein the handle (4) protrudes outwards from a central part (5) of an inner bottom surface (6) of the receptacle (2).

3. The strainer according to one of claims 1 to 2, wherein the cover (3) is of a resilient and flexible material allowing the user, when the cover (3) is in the proximal position, to change the shape of the cover by pressing an upper part of the cover (3) to force the substance in the receptacle (2) to be pressed towards the receptacle.

4. The strainer according to claim 3, wherein the material of the cover (3) is of silicone.

5. The strainer according to one of claims 1 to 2, wherein the cover (3) is of a stiff material maintaining its original shape when the user presses an upper part of the cover (3) to force the substance in the receptacle (2) to be pressed towards the receptacle, when the cover is in the proximal position.

6. The strainer according to claim 5, wherein the cover (3) is of plastic.

7. The strainer according to of of claims 1 to 6, wherein the receptacle (2) and the handle (4) is of steel.

8. The strainer according to one of claims 1 to 7, wherein the substance is tea and the strainer (1) is a tea strainer.

## Amended claims

### Amended claims in accordance with Rule 137(2) EPC.

1. A strainer (1) comprising:
a receptacle (2) having perforations (8) allowing a liquid to enter and to exit the receptacle (2) via the perforations (8) and an elongated handle (4) protruding from the receptacle, and
a cover (3) provided with an opening (7) through which the handle (4) protrudes when the cover is arranged on top of the receptacle (2), the cover (3) is movable along the handle (4) between a distal position where the receptacle (2) and cover (3) are located at a distance from each other which allows the user to use the handle (4) for filling the receptacle (2) with a substance by dipping the receptacle into the substance, and a proximal position, **characterized in that**
in the proximal position the receptacle (2) and cover (3) are closely located together and allow the user to press the cover (3) towards the substance in the receptacle for forcing the substance to be pressed towards the receptacle (2) for causing liquid to exit the receptacle via the perforations (8).

2. The strainer according to claim 1, wherein the handle (4) protrudes outwards from a central part (5) of an inner bottom surface (6) of the receptacle (2).

3. The strainer according to one of claims 1 to 2, wherein the cover (3) is of a resilient and flexible material allowing the user, when the cover (3) is in the proximal position, to change the shape of the cover by pressing an upper part of the cover (3) to force the substance in the receptacle (2) to be pressed towards the receptacle.

4. The strainer according to claim 3, wherein the material of the cover (3) is of silicone.

5. The strainer according to one of claims 1 to 2, wherein the cover (3) is of a stiff material maintaining its original shape when the user presses an upper part of the cover (3) to force the substance in the receptacle (2) to be pressed towards the receptacle, when the cover is in the proximal position.

6. The strainer according to claim 5, wherein the cover (3) is of plastic.

7. The strainer according to of of claims 1 to 6, wherein the receptacle (2) and the handle (4) is of steel.

8. The strainer according to one of claims 1 to 7, wherein the substance is tea and the strainer (1) is a tea strainer.
